Europäisches Patentamt

European Patent Office

Office européen des brevets

(11) Numéro de publication: **0 180 508**
A1

# (12) DEMANDE DE BREVET EUROPEEN

(21) Numéro de dépôt: 85402013.8

(22) Date de dépôt: 16.10.85

(51) Int. Cl.⁴: **B 60 R 16/02**

(30) Priorité: 25.10.84 FR 8416355

(43) Date de publication de la demande: 07.05.86
Bulletin 86/19

(84) Etats contractants désignés: **DE GB IT SE**

(71) Demandeur: **ACIERS ET OUTILLAGE PEUGEOT Société dite:, F-25400 Audincourt (Doubs) (FR)**

(72) Inventeur: **Coullerut, Jacques, 45 H Rue d'Audincourt, F-25230 Seloncourt (FR)**

(74) Mandataire: **Bressand, Georges et al, c/o CABINET LAVOIX 2 Place d'Estienne d'Orves, F-75441 Paris Cedex 09 (FR)**

(54) **Dispositif de transmission, par contact tournant à frottement, d'informations issues d'un volant de direction, à un organe solidaire d'un véhicule.**

(57) Ce dispositif comprend un système de traitement (1) des informations provenant de plusieurs organes de commande montés sur un volant, un système de reconnaissance des informations (2) fixé sur le véhicule et des contacts tournants (3) à frottement destinés à l'alimentation en énergie du système de traitement des informations et à la transmission des informations. Ce dispositif comporte une horloge (4) délivrant une fréquence d'exploration Fe, des moyens d'exploration permanente (5), des organes de commande et de détection de l'actionnement desdits organes de commande, des moyens d'émission (6) de signaux correspondant respectivement aux organes de commande actionnés et de transmission par l'intermédiaire desdits contacts tournants (3) vers les moyens de reconnaissance (7) associés à un dispositif de commande de charge (8).

1

Dispositif de transmission, par contact tournant à frottement, d'informations issues d'un volant de direction, à un organe solidaire d'un véhicule.-

La présente invention se rapporte à des dispositifs de transmission d'informations issues d'organes de commande montés sur le volant de direction d'un véhicule et notamment de transmission des ordres donnés par le conducteur du véhicule, traduits par des actions sur des organes de commande solidaires du volant, à un système de reconnaissance de l'information solidaire du véhicule.

Il existe, dans l'état de la technique, des dispositifs utilisant comme moyens de transmission, des contacts tournants à frottement constitués de frotteurs venant prendre appui dans des pistes, permettant ainsi de réaliser des liaisons entre le volant mobile et la partie fixe du véhicule. Cependant, la conception de ces dispositifs ne permet la transmission que d'un nombre très limité d'informations.

On rencontre également des dispositifs dans lesquels la partie centrale du volant qui porte les organes de commande est fixe par rapport à la jante mobile du volant.

Le but de l'invention est donc de proposer un dispositif du type à organes de commande solidaires du volant permettant de transmettre un grand nombre d'informations issues d'un volant de direction.

A cet effet, l'invention a pour objet un dispositif de transmission d'informations issues d'un volant de direction, à un organe solidaire d'un véhicule, comprenant un système de traitement des informations provenant de plusieurs organes de commande montés sur un volant mobile, un système de reconnaissance des informations fixé sur le véhicule, et des contacts tournants à frottement destinés à l'alimentation en énergie du système de traitement des informations et à la transmission des informations, caractérisé en ce qu'il comporte des moyens d'exploration permanente des organes de commande et de détection de l'actionnement desdits organes de commande, des moyens d'émission de signaux correspondant respectivement aux organes de commande actionnés et de transmission par l'intermédiaire desdits contacts tournants vers des moyens de reconnaissance solidaires du véhicule.

L'invention sera mieux comprise à l'aide de la description qui va suivre, donnée uniquement à titre d'exemple et faite en se référant aux dessins annexés, sur lesquels :

- la Fig.1 représente un schéma de principe d'un dispositif de transmission selon l'invention;

- la Fig.2 représente le schéma d'un système de traitement des informations monté sur un volant;

- la Fig.3 représente le schéma d'un système de reconnaissance des informations fixé sur un véhicule.

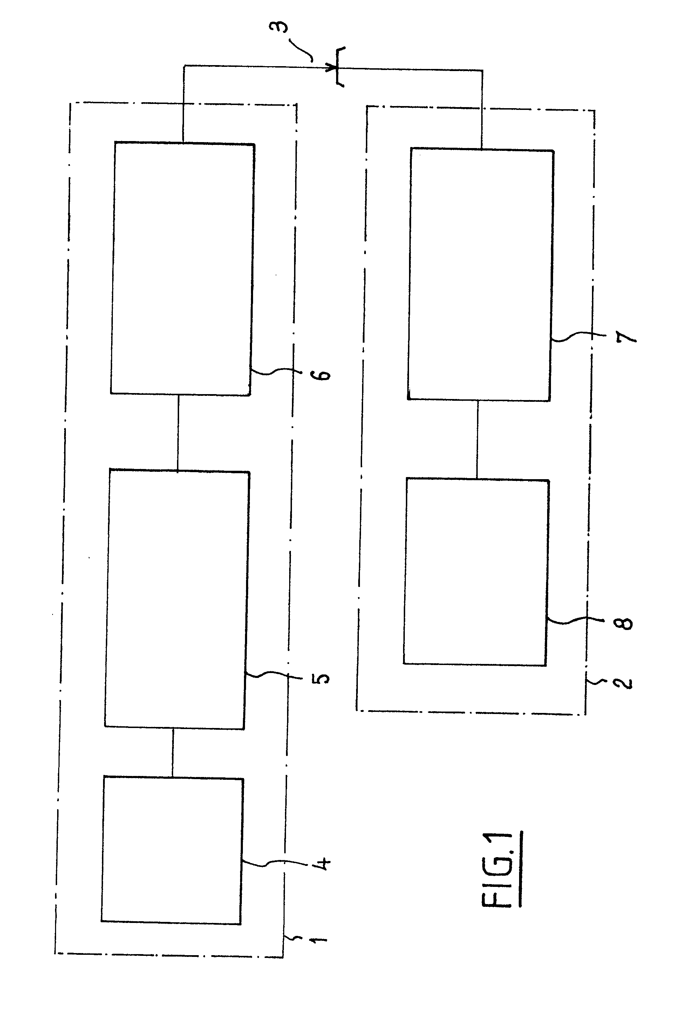

Le dispositif de transmission représenté à la Fig.1 comprend un système de traitement des informations, ci-après dénommé émetteur 1, et un système de reconnaissance des informations, ci-après dénommé récepteur 2.

La sortie de l'émetteur 1 monté sur un volant de direction (non représenté), est reliée par l'intermédiaire d'un contact tournant à frottement 3, à l'entrée du récepteur 2 solidaire d'un véhicule (non représenté).

L'émetteur 1 comprend une horloge 4 dont la sortie, délivrant un signal de fréquence d'exploiration Fe, est reliée à l'entrée d'un dispositif 5 d'exploration. La sortie de ce dispositif 5 est reliée à l'entrée d'un générateur de fréquences 6. La sortie

3

de ce générateur de fréquences 6, qui est également la sortie de l'émetteur 1, est reliée à une borne du contact tournant à frottement 3. L'autre borne de ce contact 3 est reliée à l'entrée d'un dispositif de reconnaissance de fréquences 7 qui est également l'entrée du récepteur 2. La sortie de ce dispositif 7 est reliée à l'entrée d'un dispositif de commande de charges 8.

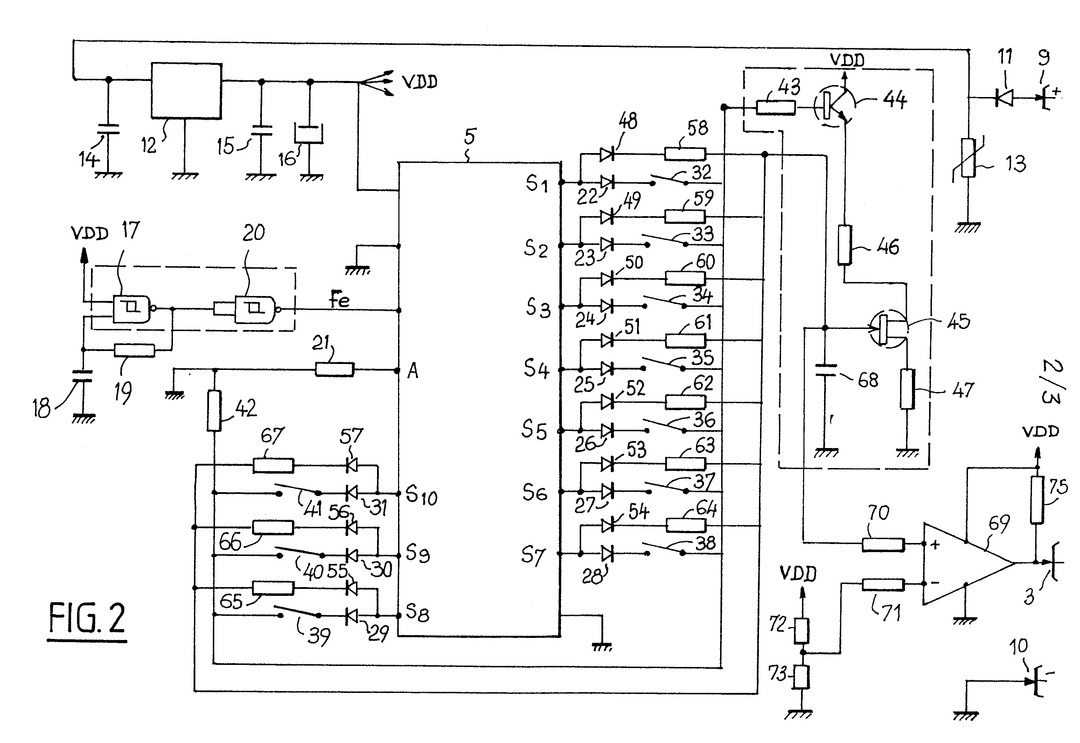

L'émetteur 1 est alimenté, comme représenté sur la Fig.2, par l'intermédiaire de deux contacts tournants à frottement 9 et 10. La borne d'entrée du contact 10 est reliée à la masse du véhicule tandis que l'autre borne est reliée à la masse du volant. La borne d'entrée du contact tournant 9 est reliée au plus de la batterie du véhicule tandis que l'autre borne est reliée à l'anode d'une diode 11. La cathode de cette diode 11 est reliée à une borne d'un dispositif de régulation de tension 12. Une varistance 13 et un condensateur 14 sont branchés en parallèle entre cette borne du dispositif 12 et la masse.

La borne de sortie du dispositif 12, délivrant une tension régulée VDD, est reliée à une borne du dispositif d'exploration 5. Deux condensateurs 15 et 16 sont branchés en parallèle entre la borne de sortie du dispositif 12 et la masse.

Une porte 17 a une de ses entrées reliée à la tension VDD délivrée par le dispositif 12 et l'autre entrée reliée à une borne d'un condensateur 18 dont l'autre borne est reliée à la masse.

Une résistance 19 est branchée entre la borne du condensateur 18 reliée à l'entrée de la porte 17 et la sortie de cette porte 17. Cette sortie est reliée aux deux entrées d'une porte 20 dont la sortie,

4

délivrant la fréquence d'exploration Fe, est reliée à l'entrée appelée couramment entrée horloge du dispositif d'exploration 5. Une borne A du dispositif 5 est reliée à la masse à travers une résistance 21. Les bornes S1, S2, S3,S4,S5,S6,S7,S8,S9,S10 de sortie du dispositif 5 sont reliées aux anodes de diodes 22 à 31 respectivement. Les cathodes de ces diodes 22 à 31 sont reliées chacune à une borne d'un commutateur 32 à 41 respectivement. L'autre borne de chaque commutateur 32 à 41 est reliée à la masse à travers une résistance 42. Ces bornes des commutateurs sont également reliées à une extrémité d'une résistance 43 dont l'autre extrémité est reliée à la base d'un transistor NPN 44. Le collecteur de ce transistor 44 est relié à la tension régulée VDD tandis que son émetteur est relié au drain d'un transistor unijonction 45 à travers une résistance 46.

La source du transistor 45 est reliée à une borne d'une résistance 47 dont l'autre borne est reliée à la masse.

Les bornes S1 à S10 de sortie du dispositif 5 sont également reliées aux anodes de diodes 48 à 57 respectivement. Les cathodes de ces diodes 48 à 57 sont reliées à une extrémité des résistances 58 à 67 respectivement, qui ont des valeurs différentes comme on le verra par la suite. Les autres extrémités de ces résistances 58 à 67 sont reliées à la grille du transistor 45.

La grille de ce transistor 45 est reliée à une borne d'un condensateur 68 dont l'autre borne est reliée à la masse.

La grille du transistor 45 est également reliée à l'entrée non inverseuse d'un comparateur 69 à travers une résistance 70.

5

L'entrée inverseuse du comparateur 69 est reliée, à travers une résistance 71, au point milieu d'une branche composée de deux résistances en série 72 et 73. Une extrémité de cette branche est reliée à la tension régulée VDD et l'autre extrémité est reliée à la masse.

La sortie du comparateur 69 est reliée à une borne d'une résistance 75 dont l'autre borne est reliée à la tension régulée VDD. Cette sortie est également reliée à une borne du contact tournant 3.

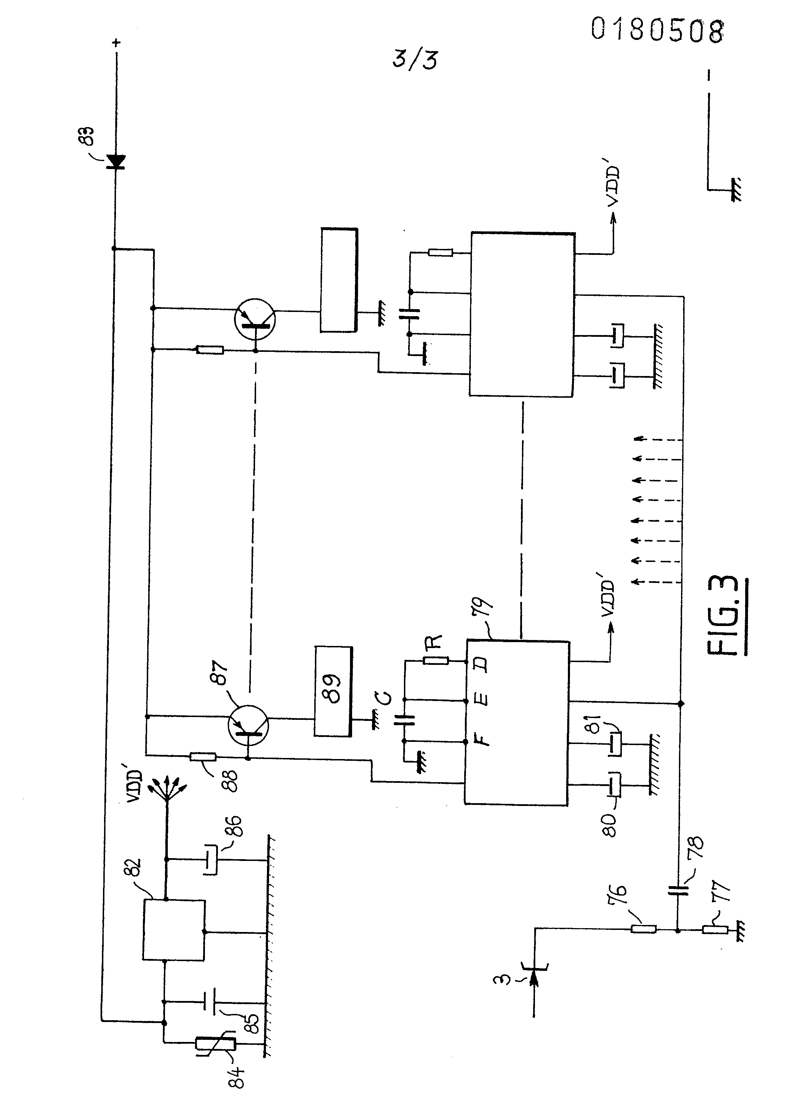

L'autre borne de ce contact tournant 3 est reliée, comme on le voit sur la Fig.3, à une extrémité d'une branche composée de deux résistances en série 76 et 77. L'autre extrémité de cette branche est reliée à la masse. Le point milieu de la branche composée des résistances 76 et 77 est relié à une borne d'un condensateur 78 dont l'autre borne est reliée à une borne d'entrée de dix dispositifs de filtrage dont uniquement deux sont représentés.

Ces dispositifs étant identiques, on ne décrira que le dispositif 79.

Deux bornes du dispositifs 79 sont reliées à la masse à travers des condensateurs 80 et 81 respectivement. Une autre borne du dispositif 79 est reliée à la tension VDD'. Cette tension régulée VDD' est obtenue par un dispositif de régulation de tension 82 dont la borne d'entrée est reliée à la cathode d'une diode 83. L'anode de cette diode 83 est reliée au plus de la batterie du véhicule. Cette borne d'entrée du régulateur 82 est également reliée à la masse à travers une varistance 84 en parallèle avec un condensateur 85.

La borne de sortie du régulateur 82, délivrant la tension régulée VDD', est également reliée à la masse à travers un condensateur 86.

6

Une borne D du dispositif 79 est reliée à une borne d'une résistance R dont l'autre borne est reliée à une borne E du dispositif 79 et à une borne d'un condensateur C. L'autre borne du condensateur C est reliée à une borne F du dispositif 79 qui est elle-même reliée à la masse.

La borne de sortie du dispositif 79 est reliée à la base d'un transistor PNP 87 dont l'émetteur est relié à la cathode de la diode 83. La base de ce transistor 87 est également connectée à une borne d'une résistance 88 dont l'autre borne est reliée à la cathode de la diode 83. Le collecteur du transistor 87 est relié à une borne d'une charge 89 dont l'autre borne est reliée à la masse.

Le fonctionnement du dispositif de transmission décrit est le suivant.

Les tensions VDD et VDD' d'alimentation des divers composants de l'émetteur 1 et du récepteur 2 respectivement sont délivrés par les régulateurs de tension 12 et 82. Ces tensions VDD et VDD' sont régulées à une valeur assez basse pour que le fonctionnement du dispositif de transmission ne soit pas affecté par les variations de tension du réseau du véhicule, par exemple 7 à 8 volts pour une tension de réseau de 12 volts.

L'horloge 4 constituée par les portes 17 et 20, le condensateur 18 et la résistance 19, délivre une fréquence fixe d'exploration Fe. Cette fréquence Fe est appliquée à la borne couramment appelée entrée horloge du dispositif 5 d'exploration.

Ce dispositif 5 est un diviseur par N, N étant le nombre d'informations électriques à transmettre; dans le présent exemple ce nombre est 10.

7

Le signal de fréquence d'exploration Fe provoque le balayage successif des bornes S1 à S10 du dispositif 5 et ainsi l'exploration successive de l'état des commutateurs 32 à 41. En effet, ce signal de fréquence Fe fait passer successivement à l'état haut les sorties S1 à S10 précitées du dispositif 5. Ce phénomène de balayage se poursuit indéfiniment.

Lorsque les bornes S1 à S10 passent à l'état haut, le condensateur 68 se charge à travers les résistances calibrées 58 à 67 successivement.

Si l'un des commutateurs est fermé, par exemple 32, lorsque la sortie S1 du dispositif 5 passe à l'état haut, le transistor 44 est rendu conducteur car on applique un courant sur sa base à travers la diode 22, le commutateur 32 et la résistance 43.

Le transistor 44 étant passant, le transistor unijonction 45 se débloque également et permet au condensateur 68 de se décharger dans la résistance 47 à travers le transistor 45. Cette décharge a pour effet de rebloquer le transistor 45.

Le condensateur 68 se recharge à travers la résistance 58 et la diode 48. Lorsque la charge du condensateur 68 est de nouveau suffisante, le transistor 45 devient passant et le condensateur 68 se décharge à travers la résistance 47. Ce fonctionnement se poursuit tant que la sortie S1 du dispositif 5 est à l'état haut.

On trouve donc sur la grille du transistor unijonction 45 un signal en dents de scie dont la période est fonction de la résistance 58 et du condensateur 68.

Comme on l'a déjà dit, l'exploration des bornes de sortie S1 à S10 du dispositif 5 est successive et si le commutateur 32 à 41 correspondant à la borne du dispositif 5 qui se trouve à l'état haut, est

8

fermé, on va trouver sur la grille du transistor 45 un signal en dents de scie dont la période sera fonction de la valeur de l'une des résistances 58 à 67.

On peut ainsi, en donnant différentes valeurs aux résistances 58 à 67, obtenir des périodes du signal en dents de scie, propres à chaque borne de sortie du dispositif 5 et donc à chaque commutateur représentant une information.

Lesdites bornes de sortie du dispositif 5 étant mises successivement à l'état haut, ce dispositif permet de s'affranchir des difficultés que pourrait provoquer la fermeture simultanée de plusieurs commutateurs 32 à 41 grâce au balayage desdites bornes de sortie. Les résistances 58 à 67 sont calibrées et de valeurs suffisamment différentes pour permettre d'engendrer des fréquences facilement différenciables.

Le signal en dents de scie délivré par la grille du transistor 45 est appliqué à l'entrée non inverseuse d'un comparateur 69 où il est transformé en signal carré ou rectangulaire, ce signal peut être optimisé et on peut régler son rapport cyclique suivant les performances du système grâce aux résistances 72 et 73.

Ce signal est ensuite appliqué à une borne du contact tournant 3 qui permet de réaliser une liaison électrique entre l'émetteur 1 et le récepteur 2.

Ce récepteur 2, Fig.3, comporte le dispositif de régulation de tension 82 déjà décrit.

L'information caractérisée par une fréquence déterminée provient du contact tournant 3. Ce signal est atténué par un pont diviseur composé des résistances 76 et 77. Cette atténuation est fixée par les spécifications des dispositifs de filtrage 79.

Le signal est ensuite appliqué aux bornes

9

d'entrée, des dispositifs 79 qui sont des filtres accordés en fonction des valeurs de la résistance R et du condensateur C montés sur chacun desdits dispositifs 79.

Ces dispositifs 79 permettent de reconnaitre et de ne laisser passer qu'une bande étroite de fréquences bien déterminée dont la valeur est donnée par:

$$F = \frac{1}{K.R.C}$$

où K est un coefficient propre aux dispositifs 79.

On a vu que l'émetteur 1 délivre des fréquences bien déterminées et fonction des valeurs des résistances 58 à 67. Les valeurs des résistances R et des condensateurs C des dispositifs 79 sont accordées sur les fréquences de sortie de l'émetteur 1.

Les bornes de sortie des dispositifs 79, correspondant auxdites fréquences, basculent et commandent les bases des transistors 87, les rendant passant de façon à alimenter les charges 89 correspondant chacune à l'exécution de l'ordre donné.

Ainsi qu'on vient de le décrire, l'actionnement des différents organes de commande portés par le volant est transmis instantanément aux charges. Un tel fonctionnement est intéressant pour la commande d'appel de phares ou d'avertisseurs par exemple.

En revanche, le fonctionnement avec maintien de la charge sous tension (par exemple lève-vitre) nécessite deux actions, une action marche et une action arrêt. Ceci impose l'utilisation d'un système bistable utilisant deux informations successives ou deux voies, l'une pour la marche, l'autre pour l'arrêt.

Ainsi, on peut interposer un système bista-

10

ble ou mémoire entre la charge proprement dite et le dispositif 89 appelé charge sur la Fig.3.

Le tableau ci-après donne à titre d'exemple les principaux éléments utilisés dans une réalisation de l'invention.

- Horloge 4 : CD 4093
- Fréquence d'exploration à peu près égale à 200 Hz
- Dispositif d'exploration : CD 4017
- Fréquences calibrées séparées d'à peu près 4 KHz
- Dispositif 79 : LM 567   K = 1,1
- Transistor 44 : BC 171
- Transistor 45 : 2N 2646
- Transistor 87 : BC 251

Ce dispositif trouve son application dans la transmission d'informations issues d'organes de commande montés sur le volant de direction, à un système de reconnaissance des informations solidaire du véhicule.

11

REVENDICATIONS

1. Dispositif de transmission d'informations issues d'un volant de direction à un organe solidaire d'un véhicule, comprenant un système de traitement des informations (1) provenant de plusieurs organes de commande montés sur le volant mobile, un système de reconnaissance (2) des informations, fixé sur le véhicule et des contacts tournants (3,9,10) à frottement destinés à l'alimentation en énergie du système de traitement des informations (1) et à la transmission desdites informations, caractérisé en ce qu'il comporte des moyens d'exploration permanente (5), des organes de commande (32 à 41) et de détection de l'actionnement desdits organes de commande, des moyens d'émission (6) de signaux correspondant respectivement aux organes de commande actionnés et de transmission par l'intermédiaire desdits contacts tournants (3) vers des moyens de reconnaissance (7) solidaires du véhicule.

2. Dispositif de transmission d'informations selon la revendication 1, caractérisé en ce qu'il comporte des moyens d'émission (6) et de transmission des informations assurant la transmission des informations sous forme de signaux de différentes fréquences correspondant chacune à l'actionnement d'un desdits organes de commande (32 à 41).

3. Dispositif de transmission d'informations selon la revendication 2, caractérisé en ce que les moyens d'exploration sont constitués par un diviseur (5) par N piloté par une horloge (4), N étant le nombre d'organes de commande.

4. Dispositif de transmission d'informations selon la revendication 3, caractérisé en ce que des résistances (58 à 67) sont associées à chaque sortie (S1 à S10) du diviseur (5) par N.

12

5. Dispositif de transmission d'informations selon la revendication 4, caractérisé en ce que les moyens d'émission (6) et de transmission des informations sont constitués par un oscillateur dont la fréquence de fonctionnement est fixée par les résistances (58 à 67) associées à chaque sortie (S1 à S10) du diviseur (5) par N.

6. Dispositif de transmission d'informations selon la revendication 5, caractérisé en ce que les moyens de reconnaissance (7) des informations sont constitués par autant de filtres que l'oscillateur délivre de signaux de fréquences différentes.

FIG.1

0180508

0180508

2/3

FIG.2

FIG.3

0180508

## Office européen
### des brevets

# RAPPORT DE RECHERCHE EUROPEENNE

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | DE-A-3 113 191  (NIPPON SOKEN INC.) <br> * Figure 1 * <br><br> ----- | 1 | B 60 R   16/02 |
| | | | **DOMAINES TECHNIQUES RECHERCHES (Int. Cl.4)** |
| | | | B 06 R <br> B 60 Q |

Le présent rapport de recherche a été établi pour toutes les revendications

| Lieu de la recherche | Date d'achèvement de la recherche | Examinateur |
|---|---|---|
| LA HAYE | 05-12-1985 | ONILLON C.G.A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82